# EUROPEAN PATENT SPECIFICATION

(11) **EP 3 824 588 B1**
(45) Date of publication and mention of the grant of the patent: **23.09.2026**
(21) Application number: 19840114.3
(22) Date of filing: 19.07.2019
(51) Int. Cl.: H04L 5/00

(54) **COLLISION BETWEEN SOUNDING REFERENCE SIGNALS (SRS) AND OTHER UPLINK CHANNELS**
KOLLISION ZWISCHEN SOUNDING-REFERENZSIGNALEN (SRS) UND ANDEREN UPLINK-KANÄLEN
COLLISION ENTRE DES SIGNAUX DE RÉFÉRENCE DE SONDAGE (SRS) ET D'AUTRES CANAUX DE LIAISON MONTANTE

(30) Priority: 21.07.2018 WO PCT/CN2018/096553
(43) Date of publication of application: 26.05.2021
(73) Proprietor: QUALCOMM INCORPORATED, San Diego, California 92121-1714 (US)
(72) Inventor: LIU, Le, San Diego, California 92121-1714 (US); RICO ALVARINO, Alberto, San Diego, California 92121-1714 (US); MANOLAKOS, Alexandros, San Diego, California 92121-1714 (US); CHEN, Wanshi, San Diego, California 92121-1714 (US); SENGUPTA, Ayan, San Diego, California 92121-1714 (US); WANG, Xiao Feng, San Diego, California 92121-1714 (US); WEI, Chao, San Diego, California 92121-1714 (US)
(74) Representative: Jaeger, Michael David
(86) International application number: PCT/CN2019/096826
(87) International publication number: WO 2020/020075

(56) References cited:
- EP-A1- 3 285 533
- WO-A1-2017/223196
- CN-A- 101 969 694
- CN-A- 103 428 868
- CN-A- 107 241 176
- US-A1- 2017 302 419
- US-A1- 2017 366 377
- US-B2- 8 964 683
- CATT: "Remaining issues on long PUCCH formats", vol. RAN WG1, no. Athens, Greece; 20180226 - 20180302, 17 February 2018 (2018-02-17), XP051397713, Retrieved from the Internet <URL:http://www.3gpp.org/ftp/tsg%5Fran/WG1%5FRL1/TSGR1%5F92/Docs/> [retrieved on 20180217]

## Description

### Field of the Disclosure

Aspects of the present disclosure relate to wireless communications, and more particularly, to techniques for sounding reference signal (SRS) resource configuration and processing enhancements.

### Description of Related Art

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

In some examples, a wireless multiple-access communication system may include a number of base stations (BSs), which are each capable of simultaneously supporting communication for multiple communication devices, otherwise known as user equipments (UEs). In an LTE or LTE-A network, a set of one or more base stations may define an eNodeB (eNB). In other examples (e.g., in a next generation, a new radio (NR), or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., which may be referred to as a base station, 5G NB, next generation NodeB (gNB or gNodeB), TRP, etc.). A base station or distributed unit may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. New Radio (NR) (e.g., 5G) is an example of an emerging telecommunication standard. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

EP3285533 relates to methods for providing more SRS transmission resources and meet requirements for uplink channel quality measurement and channel estimation in, for example, a short-delay systemand a millimeter-wave system. US2017/0366377 relates to supporting link adaptation and overhead reduction for transmissions of reference signals between a base station and user equipments. R1-1801732 relates to collision handling between SRS and long PUCCH. US2017/0302419 relates to a system and method for sounding reference signal switching. WO2017/223196 relates to SRS transmission with carrier aggregation.

### BRIEF SUMMARY

Aspects of the present invention are provided in the independent claims. Preferred embodiments are provided in the dependent claims. The methods and devices of the disclosure each have several aspects, no single one of which is solely responsible for its desirable attributes. After considering this discussion, and particularly after reading the section entitled "Detailed Description" one will understand how the features of this disclosure provide advantages that include improved communications between access points and stations in a wireless network.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.
**FIG. 1** is a block diagram conceptually illustrating an example telecommunications system, in accordance with certain aspects of the present disclosure.
**FIG. 2** is a block diagram illustrating an example logical architecture of a distributed radio access network (RAN), in accordance with certain aspects of the present disclosure.
**FIG. 3** is a diagram illustrating an example physical architecture of a distributed RAN, in accordance with certain aspects of the present disclosure.
**FIG. 4** is a block diagram conceptually illustrating a design of an example base station (BS) and user equipment (UE), in accordance with certain aspects of the present disclosure.
**FIG. 5** is a diagram showing examples for implementing a communication protocol stack, in accordance with certain aspects of the present disclosure.
**FIG. 6** illustrates an example of a frame format for a new radio (NR) system, in accordance with certain aspects of the present disclosure.
**FIG. 7** illustrates example operations for wireless communications by a user equipment, in accordance with certain aspects of the present disclosure.
**FIG. 8** illustrates example operations for wireless communications by a network entity, in accordance with certain aspects of the present disclosure.
**FIGs. 9** **and** **10** illustrates example sounding reference signal (SRS) transmissions, in accordance with certain aspects of the present disclosure.
**FIG. 11** illustrates example scaling factors that may be applied, in accordance with certain aspects of the present disclosure.
**FIG. 12-15** illustrate example SRS transmission configurations, in accordance with aspects of the present disclosure.
**FIG. 16** illustrates an example communications device (e.g., a UE) that may include various components configured to perform operations for the techniques disclosed herein in accordance with aspects of the present disclosure.
**FIG. 17** illustrates a communications device (e.g., a network entity) that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for sounding reference signal (SRS) resource configuration and transmission enhancements.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication technologies, such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS).

New Radio (NR) is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

New radio (NR) access (e.g., 5G technology) may support various wireless communication services, such as enhanced mobile broadband (eMBB) targeting wide bandwidth (e.g., 80 MHz or beyond), millimeter wave (mmW) targeting high carrier frequency (e.g., 25 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe.

### Example Wireless Communications System

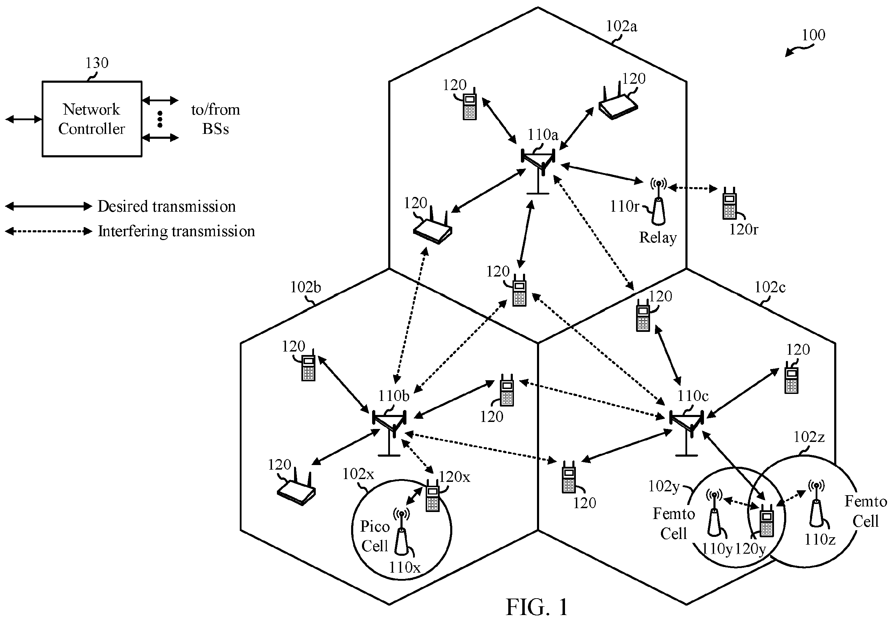

**FIG.** 1 illustrates an example wireless communication network 100 in which aspects of the present disclosure may be performed. For example, the wireless communication network 100 may be a New Radio (NR) or 5G network.

As illustrated in FIG. 1, the wireless communication network 100 may include a number of base stations (BSs) 110 and other network entities. A BS may be a station that communicates with user equipments (UEs). Each BS 110 may provide communication coverage for a particular geographic area. In 3GPP, the term "cell" can refer to a coverage area of a Node B (NB) and/or a Node B subsystem serving this coverage area, depending on the context in which the term is used. In NR systems, the term "cell" and next generation NodeB (gNB), new radio base station (NR BS), 5G NB, access point (AP), or transmission reception point (TRP) may be interchangeable. In some examples, a cell may not necessarily be stationary, and the geographic area of the cell may move according to the location of a mobile BS. In some examples, the base stations may be interconnected to one another and/or to one or more other base stations or network nodes (not shown) in wireless communication network 100 through various types of backhaul interfaces, such as a direct physical connection, a wireless connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, NR or 5G RAT networks may be deployed.

A base station (BS) may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in FIG. 1, the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple (e.g., three) cells.

Wireless communication network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in FIG. 1, a relay station 110r may communicate with the BS 110a and a UE 120r in order to facilitate communication between the BS 110a and the UE 120r. A relay station may also be referred to as a relay BS, a relay, etc.

Wireless communication network 100 may be a heterogeneous network that includes BSs of different types, e.g., macro BS, pico BS, femto BS, relays, etc. These different types of BSs may have different transmit power levels, different coverage areas, and different impact on interference in the wireless communication network 100. For example, macro BS may have a high transmit power level (e.g., 20 Watts) whereas pico BS, femto BS, and relays may have a lower transmit power level (e.g., 1 Watt).

Wireless communication network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another (e.g., directly or indirectly) via wireless or wireline backhaul.

The UEs 120 (e.g., 120x, 120y, etc.) may be dispersed throughout the wireless communication network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR. NR may utilize OFDM with a CP on the uplink and downlink and include support for half-duplex operation using TDD. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

In some examples, access to the air interface may be scheduled, wherein a scheduling entity (e.g., a base station) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

**In** **FIG. 1****,** a solid line with double arrows indicates desired transmissions between a UE and a serving BS, which is a BS designated to serve the UE on the downlink and/or uplink. A finely dashed line with double arrows indicates interfering transmissions between a UE and a BS.

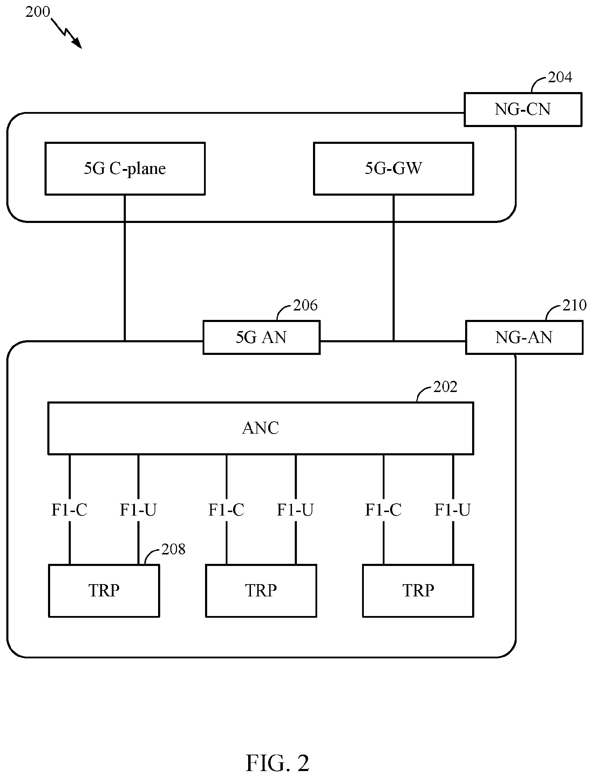

FIG. 2 illustrates an example logical architecture of a distributed Radio Access Network (RAN) 200, which may be implemented in the wireless communication network 100 illustrated in FIG. 1. A 5G access node 206 may include an access node controller (ANC) 202. ANC 202 may be a central unit (CU) of the distributed RAN 200. The backhaul interface to the Next Generation Core Network (NG-CN) 204 may terminate at ANC 202. The backhaul interface to neighboring next generation access Nodes (NG-ANs) 210 may terminate at ANC 202. ANC 202 may include one or more transmission reception points (TRPs) 208 (e.g., cells, BSs, gNBs, etc.).

The TRPs 208 may be a distributed unit (DU). TRPs 208 may be connected to a single ANC (e.g., ANC 202) or more than one ANC (not illustrated). For example, for RAN sharing, radio as a service (RaaS), and service specific AND deployments, TRPs 208 may be connected to more than one ANC. TRPs 208 may each include one or more antenna ports. TRPs 208 may be configured to individually (e.g., dynamic selection) or jointly (e.g., joint transmission) serve traffic to a UE.

The logical architecture of distributed RAN 200 may support fronthauling solutions across different deployment types. For example, the logical architecture may be based on transmit network capabilities (e.g., bandwidth, latency, and/or jitter).

The logical architecture of distributed RAN 200 may share features and/or components with LTE. For example, next generation access node (NG-AN) 210 may support dual connectivity with NR and may share a common fronthaul for LTE and NR.

The logical architecture of distributed RAN 200 may enable cooperation between and among TRPs 208, for example, within a TRP and/or across TRPs via ANC 202. An inter-TRP interface may not be used.

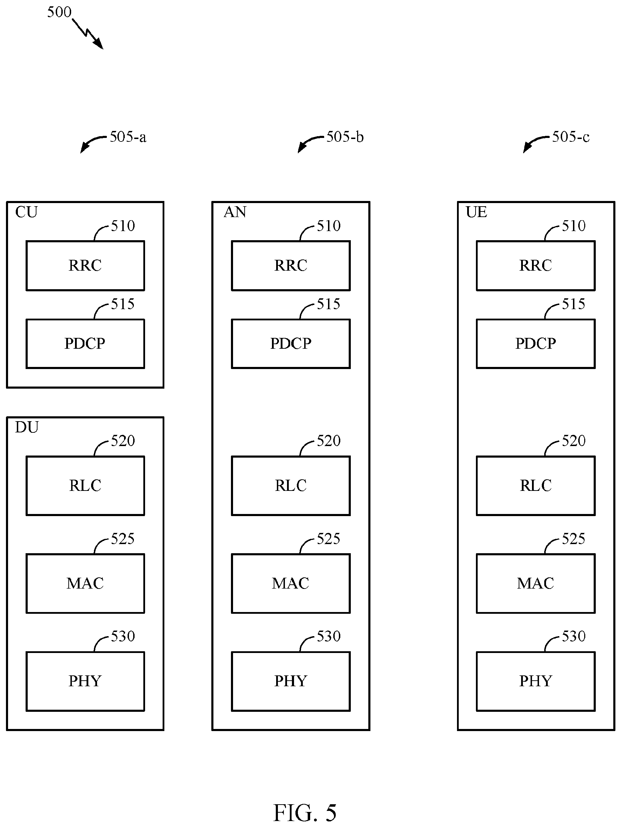

Logical functions may be dynamically distributed in the logical architecture of distributed RAN 200. As will be described in more detail with reference to FIG. 5, the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU (e.g., TRP 208) or CU (e.g., ANC 202).

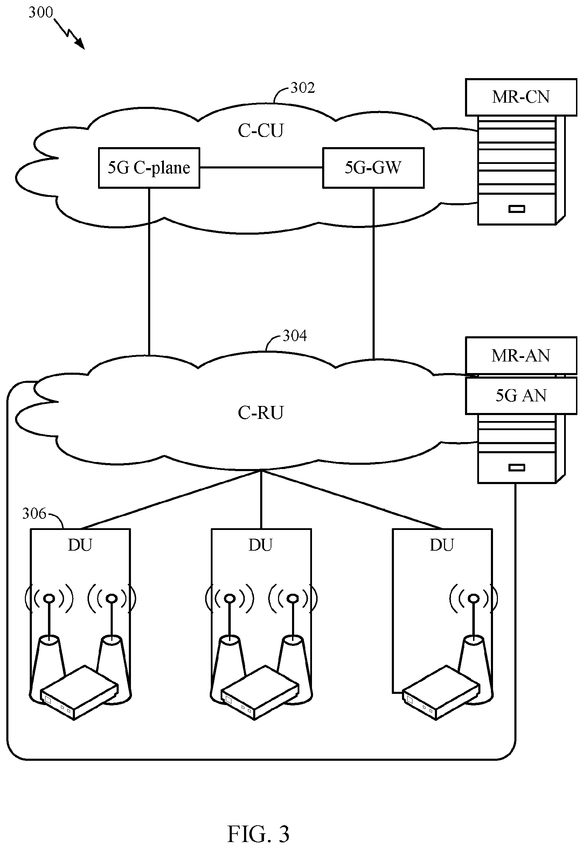

FIG. 3 illustrates an example physical architecture of a distributed Radio Access Network (RAN) 300, according to aspects of the present disclosure. A centralized core network unit (C-CU) 302 may host core network functions. C-CU 302 may be centrally deployed. C-CU 302 functionality may be offloaded (e.g., to advanced wireless services (AWS)), in an effort to handle peak capacity.

A centralized RAN unit (C-RU) 304 may host one or more ANC functions. Optionally, the C-RU 304 may host core network functions locally. The C-RU 304 may have distributed deployment. The C-RU 304 may be close to the network edge.

A DU 306 may host one or more TRPs (Edge Node (EN), an Edge Unit (EU), a Radio Head (RH), a Smart Radio Head (SRH), or the like). The DU may be located at edges of the network with radio frequency (RF) functionality.

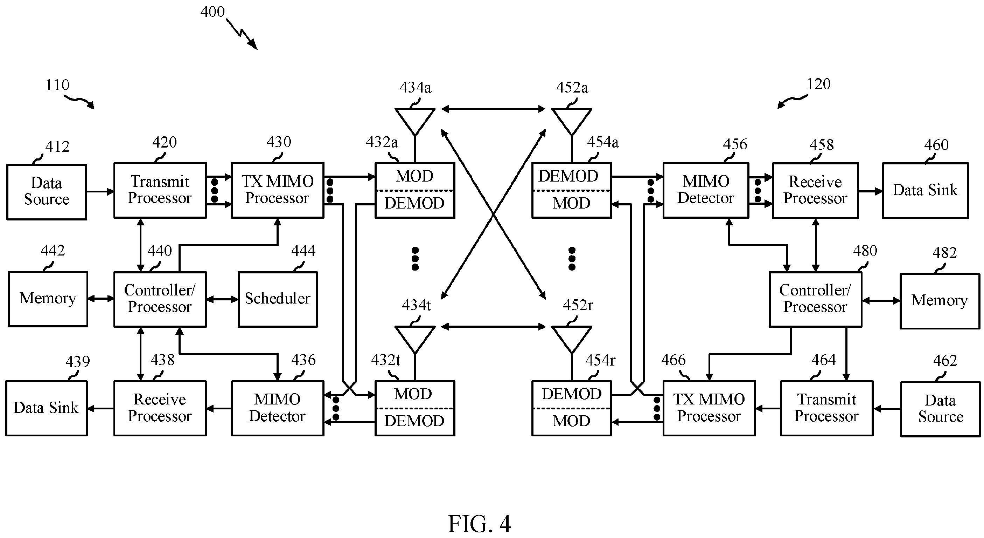

FIG. 4 illustrates example components of BS 110 and UE 120 (as depicted in FIG. 1), which may be used to implement aspects of the present disclosure. For example, antennas 452, processors 466, 458, 464, and/or controller/processor 480 of the UE 120 and/or antennas 434, processors 420, 430, 438, and/or controller/processor 440 of the BS 110 may be used to perform the various techniques and methods described herein.

At the BS 110, a transmit processor 420 may receive data from a data source 412 and control information from a controller/processor 440. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 420 may process (e.g., encode and symbol map) the data and control information to obtain data symbols and control symbols, respectively. The processor 420 may also generate reference symbols, e.g., for the primary synchronization signal (PSS), secondary synchronization signal (SSS), and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) in transceivers 454a through 454r, respectively. Each demodulator 454 may condition (e.g., filter, amplify, downconvert, and digitize) a respective received signal to obtain input samples. Each demodulator may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at UE 120, a transmit processor 464 may receive and process data (e.g., for the physical uplink shared channel (PUSCH)) from a data source 462 and control information (e.g., for the physical uplink control channel (PUCCH) from the controller/processor 480. The transmit processor 464 may also generate reference symbols for a reference signal (e.g., for the sounding reference signal (SRS)). The symbols from the transmit processor 464 may be precoded by a TX MIMO processor 466 if applicable, further processed by the demodulators in transceivers 454a through 454r (e.g., for SC-FDM, etc.), and transmitted to the base station 110. At the BS 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the BS 110 may perform or direct the execution of processes for the techniques described herein. The memories 442 and 482 may store data and program codes for BS 110 and UE 120, respectively. A scheduler 444 may schedule UEs for data transmission on the downlink and/or uplink.

FIG. 5 illustrates a diagram 500 showing examples for implementing a communications protocol stack, according to aspects of the present disclosure. The illustrated communications protocol stacks may be implemented by devices operating in a wireless communication system, such as a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples, the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in FIG. 2) and distributed network access device (e.g., DU 208 in FIG. 2). In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device. In the second option, RRC layer 510, PDCP layer 515, RLC layer 520, MAC layer 525, and PHY layer 530 may each be implemented by the AN. The second option 505-b may be useful in, for example, a femto cell deployment.

Regardless of whether a network access device implements part or all of a protocol stack, a UE may implement an entire protocol stack as shown in 505-c (e.g., the RRC layer 510, the PDCP layer 515, the RLC layer 520, the MAC layer 525, and the PHY layer 530).

In LTE, the basic transmission time interval (TTI) or packet duration is the 1 ms subframe. In NR, a subframe is still 1 ms, but the basic TTI is referred to as a slot. A subframe contains a variable number of slots (e.g., 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing.

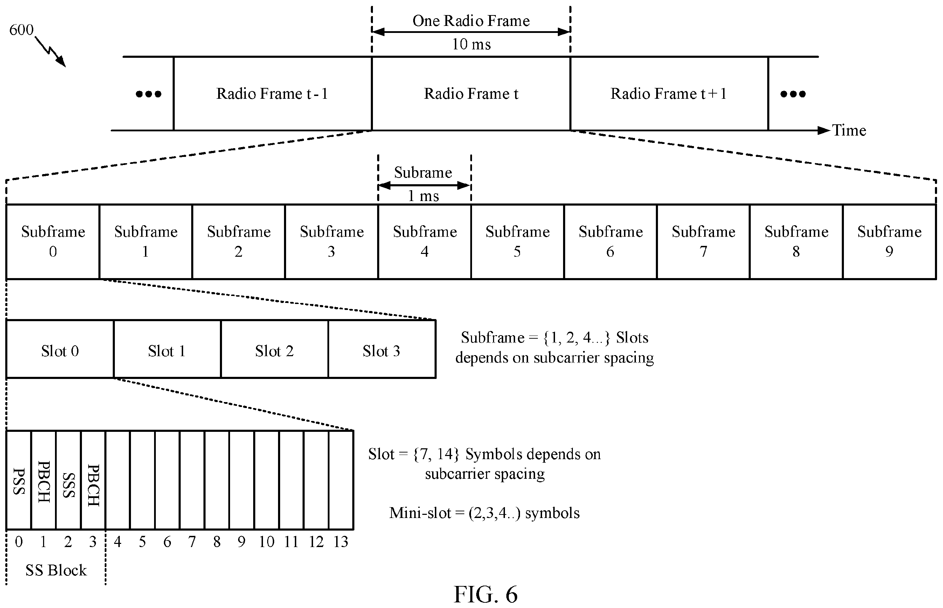

FIG. 6 is a diagram showing an example of a frame format 600 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot, which may be referred to as a sub-slot structure, refers to a transmit time interval having a duration less than a slot (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in FIG. 6. The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes. The SS block may be transmitted up to sixty-four times, for example, with up to sixty-four different beam directions for mmW. The up to sixty-four transmissions of the SS block are referred to as the SS burst set.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

### Example handling of collisions between SRS and other UL Channels

In wireless communication systems, such as the wireless communication system described above, user equipments (UEs) may transmit sounding reference signals (SRSs) so that the network/base station (e.g., eNBs, gNB, etc.) can measure uplink channel quality. Typically, one SRS is transmitted by a UE in a last symbol of a subframe. However, more recently, additional symbols have been introduced for transmitting SRSs in a normal uplink (UL) subframe, which may be identified based on a virtual cell ID associated with the UE that transmitted the (additional) SRSs. In this context, a "normal subframe" is contrasted with a "special subframe" such as those defined and placed between "normal DL subframes" and "normal UL subframes" that allow a UE to switch between receive and transmit processing.

In some cases, SRS capacity and coverage enhancements have been supported by introducing more than one symbol for SRS in a normal UL subframe and utilizing a virtual cell ID for SRS. This may involve introducing more than one symbol for SRS for one UE or for multiple UEs in a normal UL subframe. As a baseline, a minimum SRS resource allocation granularity for a cell may be one slot (e.g., one of two time slots of a subframe), when more than one symbol in a normal subframe is allocated for SRS for the cell. As noted above, a virtual cell ID may be introduced for SRS, allowing different SRS transmissions to be distinguishable.

Objectives of introducing additional SRS symbols may include increasing link budget for power-limited UEs (e.g., to give more opportunities to UEs to transmit SRS) and/or increasing capacity in general (e.g., to allow more UEs to transmit SRS, or to transmit SRS from more antennas from a same UE). One relatively straightforward way of extending link budget is by the use of more SRS symbols per subframe, but this presents various challenges. These challenges may include one or more of the following: (1) having less symbols in a subframe that can be used for other UL channels, (2) how to perform rate matching when multiple SRS symbols collide with a physical uplink shared channel (PUSCH), (3) impact on channel estimation if multiple SRS symbols collide with UL demodulation reference signals (DMRSs), (4) what dropping rules to apply if multiple SRS symbols collide with a physical uplink control channel (PUCCH), and (5) whether to drop SRS if multiple SRS symbols collide with a physical random access channel (PRACH).

Thus, to help address the issues described above, aspects of the present disclosure provide techniques for flexible SRS configuration of multiple SRS transmissions in the same subframe and flexible rules for handling collisions between SRS and other UL channels.

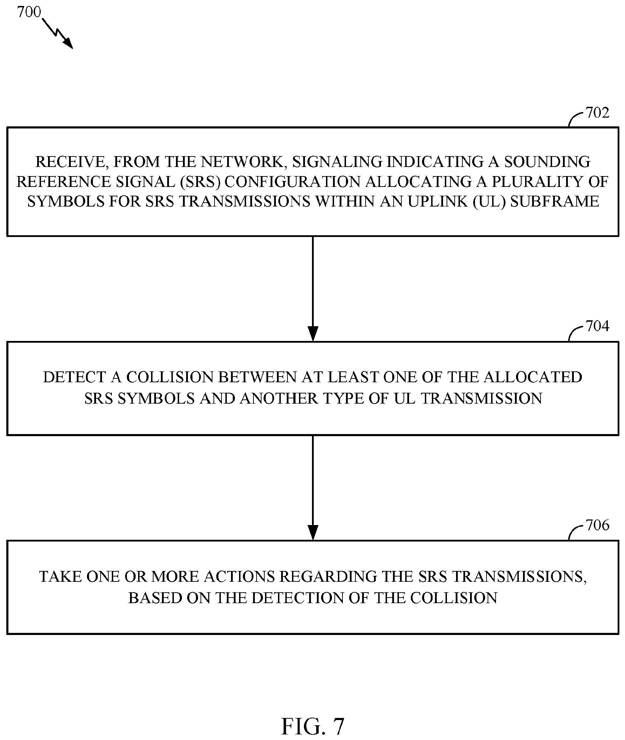

FIG. 7 illustrates example operations 700 for wireless communications in a network by a user equipment (UE) in a network, for example, for transmitting sounding reference signals (SRSs) to the network.

According to aspects, the UE may include one or more components as illustrated in FIG. 4 which may be configured to perform the operations described herein. For example, the antenna 452, demodulator/modulator 454, controller/processor 480, and/or memory 482 as illustrated in FIG. 4 may perform the operations described herein.

Operations 700 begin at 702 by receiving, from the network, signaling indicating a sounding reference signal (SRS) configuration allocating a plurality of symbols for SRS transmissions within an uplink (UL) subframe. At 704, the UE detects a collision between at least one of the allocated SRS symbols and another type of UL transmission. At 706, the UE takes one or more actions regarding the SRS transmissions, based on the detection of the collision.

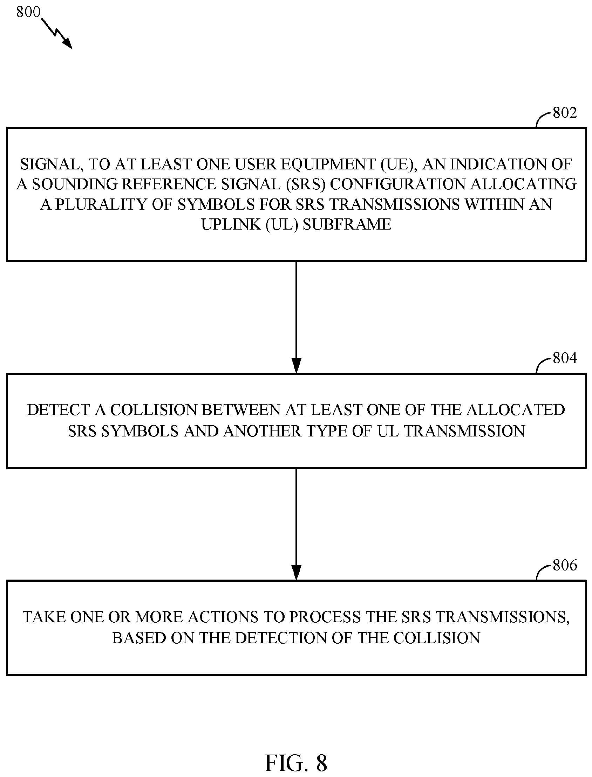

FIG. 8 illustrates example operations 800 for wireless communications by a network entity (e.g., a base station/gNB), for example, for configuring and processing sounding reference signals (SRSs) transmissions.

According to aspects, the BS may include one or more components as illustrated in FIG. 4 which may be configured to perform the operations described herein. For example, the antenna 434, demodulator/modulator 432, controller/processor 440, and/or memory 442 as illustrated in FIG. 4 may perform the operations described herein.

Operations 800 begin at 802 by signaling, to at least one user equipment (UE), an indication of a sounding reference signal (SRS) configuration allocating a plurality of symbols for SRS transmissions within an uplink (UL) subframe. At 804, the network entity detects a collision between at least one of the allocated SRS symbols and another type of UL transmission. At 806, the network entity takes one or more actions to process the SRS transmissions, based on the detection of the collision.

Aspects of the present disclosure may provide more flexibility than so-called "legacy" LTE SRS configuration for PUSCH rate matching. As used herein, the term "legacy LTE SRS configuration," generally refers to the use of a single SRS symbol located in a last symbol of a normal (non-special) subframe. It may also refer to the use of 1 or 2 SRS symbols in UpPTS (special subframe in TDD). Thus, the term "legacy LTE SRS configuration" is in contrast to the SRS configurations described herein that allows multiple SRS symbols in a normal (non-special) subframe. As used herein, the term "legacy UE" generally refers to a UE that is capable of operating according to a legacy LTE SRS configuration, but is not capable of operating according the new ("non-legacy") SRS configuration described herein with multiple SRS symbols in a subframe (or performing the operations described herein for collision management). A new ("non-legacy") UE, capable of operating according the new SRS configuration described herein will typically be able to operate according to the legacy SRS configuration (e.g., for backward-compatability).

In the legacy LTE SRS configuration, a last SRS symbol with cell-specific subframe/periodicity/bandwidth may be configured via a *SoundingRS-UL-ConfigCommon* field. According to conventional LTE rules, all UEs should avoid PUSCH transmission in last symbol of those subframes that are partially or fully overlapped with the configured SRS bandwidth. For PUSCH rate matching, information about the set of subframes in which SRS may be transmitted within a cell, as well as the SRS periodicity/bandwidth may be provided as part of system information (SI).

In some cases, SRS configurations may include Cell-specific SRS symbols with common subframe/periodicity/bandwidth. According to certain aspects, to support multiple SRS symbols in a subframe, symbol number/positions may also be indicated in the *SoundingRS-UL-ConfigCommon* field.

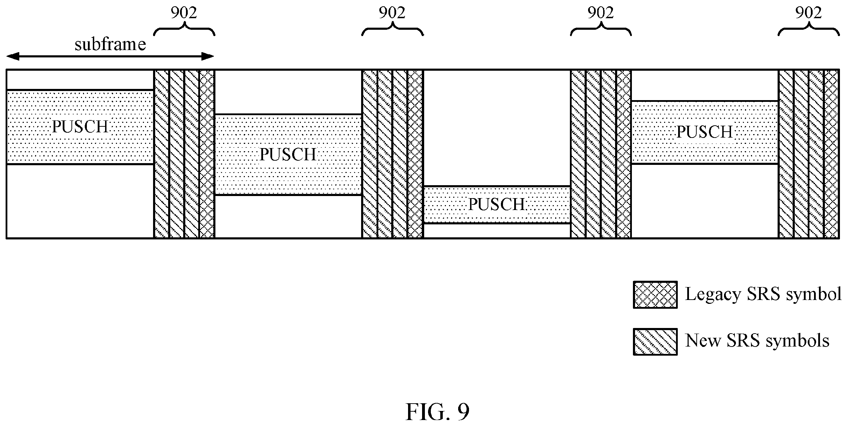

For example, with knowledge of the positions of the SRS symbols 902 for the SRS configuration shown in FIG. 9, a UE could then avoid PUSCH transmission in configured SRS symbols 902 of those subframes partially or fully overlapped with the configured SRS bandwidth. In some cases, a UE may signal its capability to rate match around new SRS symbols (that rate matching capability can be separate from the capability to transmit SRS in these symbols).

According to certain aspects, an SRS configuration may indicate cell-specific SRS with symbol configuration inforamtion, symbol group-specific configuration information, and subframe/periodicity/bandwidth configuration information in the *SoundingRS-UL-ConfigCommon* field. In this case, different groups of SRS symbols may have different configuration of the parameters.

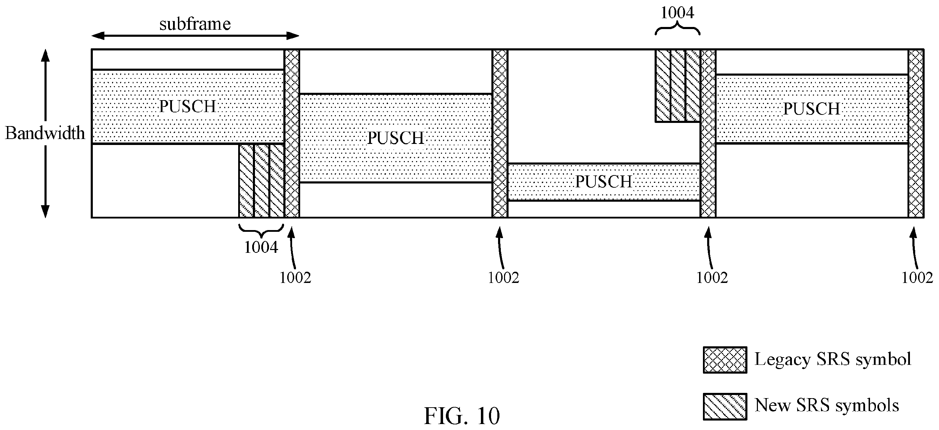

For example, as illustrated in FIG. 10, the SRS configuration of a last symbol (legacy LTE SRS) 1002 in each subframe and that of new SRS symbols 1004 have different SRS subframe/periodicity/bandwidth. As illustrated in FIG. 10, the new SRS symbols 1004 with smaller BW than that of last symbol may hop to different portions of the bandwidth periodically. In some cases, this configuration of the smaller bandwidth for new SRS symbols 1004 may help increase spectrum utilization on the resources outside SRS BW on the new SRS symbols 1004 for intra-cell UEs. Further, frequency hopping of the SRS bandwidth for the new SRS symbols 1004 may be used to provide sounding over the whole system bandwidth.

In some cases, a UE-specific SRS configuration may be provided (e.g., signaled) to the UE by the BS. For example, for PUSCH rate matching, information about the set of SRS parameters (e.g., symbol number/position and subframes/periodicity/bandwidth per symbol/symbol group) may be provided to the UE in dedicated radio resource control (RRC) signalling. Additionally, the UE-specific subframe configuration for legacy aperiodic SRS transmission can be shared by that of SRS transmission on additional symbols (e.g., new SRS symbols).

In some cases, a mix of the cases described above may be used. For example, a last symbol in a normal UL subframe may be configured in a cell-specific manner, similar as LTE legacy SRS. For the other new SRS symbols (e.g., except the last symbol), the set of SRS parameters may be configured in a UE-specific manner.

In some cases, a UE may be configured such that PUSCH is rate-matched around configured SRS/GP symbols. In such cases, a number of the remaining symbols for PUSCH in the same subframe with SRS may need to calculated to determine the number of coded symbols Q' defined in Section 5.2.2.6 for PUCCH carrying UCI and 5.2.4.1 for PUSCH carrying UCI of TS36.212 as $Q ′ = min \left(\left⌈\frac{O ⋅ {M}_{sc}^{PUSCH} ⋅ {N}_{symb}^{PUSCH} ⋅ {β}_{offset}^{PUSCH}}{{O}_{CQI - MIN}}\right⌉, {N}_{symb}^{UCI}⋅{M}_{sc}^{PUSCH}\right)$

by changing ${N}_{symb}^{PUSCH} = \left({{N}^{˜}}_{symb}^{UL}-{N}_{SRS}\right)$ to ${N}_{symb}^{PUSCH} = \left({{N}^{˜}}_{symb}^{UL}-{N}_{SRS}^{′}\right)$*,* where ${{N}^{˜}}_{symb}^{UL} = 2 \left({N}_{symb}^{UL}-1\right)$ is the symbol number for PUSCH in a subframe assuming ${N}_{symb}^{UL}$ as the symbol number for a normal UL subframe and 1-symbol DMRS per slot, *N_{SRS}* is the number of symbols used for legacy SRS in the subframe *i*, e.g., *N_{SRS}* = {0,1}, and ${N}_{SRS}^{′}$ is the number of symbols occupied for SRS transmission, including the legacy and/or additional SRS symbols and gap symbols if configured. Considering the complexity of rate matching, it may allow only slot-based PUSCH transmitted in the same subframe of SRS, e.g., ${N}_{SRS}^{′} = \left\{{N}_{SRS} or 7\right\}$. If additional SRS is configured in a half slot of a subframe, ${N}_{SRS}^{′} = 7$ is used for PUSCH rate matching; otherwise, ${N}_{SRS}^{′} = {N}_{SRS}$*.* In some cases, a minimum of 4 resource blocks (RBs) for the coded symbols of PUSCH carrying uplink control information (UCI) (e.g., HARQ-ACK, RI, PMI/CQI) may need to be adjusted based on ${N}_{SRS}^{′}$.

In some cases, PUSCH may use different power control if PUSCH is to be rate-matched around ${N}_{SRS}^{′}$ symbols. For example, when PUSCH carries UCI (e.g., HARQ-ACK, RI, PMI/CQI), a subframe-based power boost offset may be configured for PUSCH when UCI is piggybacked on PUSCH rate matching around to different ${N}_{SRS}^{′}$. For example, the transmit power of PUSCH (TS36.213) may be adjusted if there is more than 1 symbol for SRS to rate match around. For example, the power boosting offset may be configured as the relative ratio of the symbol number per subframe for PUSCH rate matching around N_{SRS} against the remaining symbol number for PUSCH rate matching around ${N}_{SRS}^{′}$. The subframe-based power control with the power boost offset due to ${N}_{SRS}^{′}$, may be configured for a shortened PUSCH (sPUSCH) such that: ${P}_{PUSCH} \left(i\right) = min \left\{\begin{matrix}{P}_{CMAX , c} , 10 {log}_{10} \left({M}_{PUSCH , c}\left(i\right)\right) + {P}_{O _ PUSCH} \left(j\right) + {α}_{c} \left(j\right) {PL}_{c} + \\ {Δ}_{TF , c} + {f}_{c} \left(i\right) + 10 {log}_{10} \frac{2 \left({N}_{symb}^{UL}-1\right) - {N}_{SRS}}{2 \left({N}_{symb}^{UL}-1\right) - {N}_{SRS}^{′}}\end{matrix}\right\} ,$ where $10 {log}_{10} \frac{2 \left({N}_{symb}^{UL}-1\right) - {N}_{SRS}}{2 \left({N}_{symb}^{UL}-1\right) - {N}_{SRS}^{′}}$ is the power boosting offset parameter based on the configuration of additional SRS/Gap symbols and the other parameters for power control is same as the parameters defined in Section 5.1.1. of TS36.213. Alternatively, this power boosting offset for PUSCH carrying UCI is explicitly indicated by higher-layer. The power boost offset may be applied to PUCCH power control, in a similar way as PUSCH.

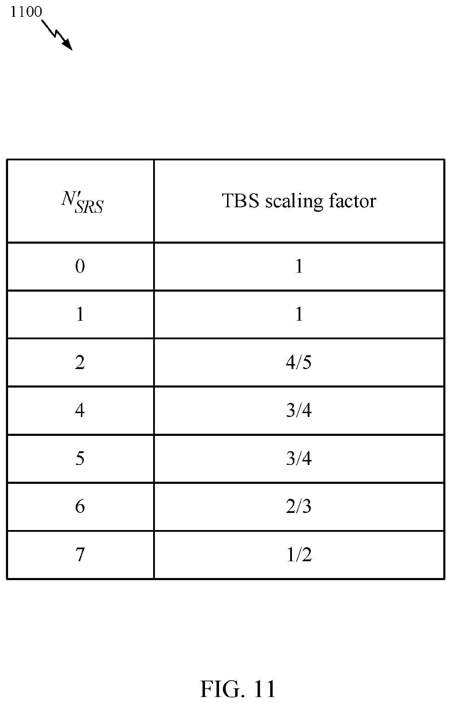

In some cases, when PUSCH is rate-matched around configured SRS/GP symbols in a subframe, a UE may introduce transport block size (TBS) scaling for PUSCH data transmission. For example, FIG. 11 illustrates a table 1100 with different TBS scaling factors, based on different values of ${N}_{SRS}^{′}$. As illustrated, as the number of additional SRS symbols, ${N}_{SRS}^{′}$, increases, the TBS scaling factor generally decreases.

In a claimed embodiment, a UE sends PUSCH with 1 transmit block by bundling/repeating two or more subframes with more than one SRS symbol. The number of the bundled/repeated subframes may be configured by the BS based on different values of ${N}_{SRS}^{′}$. In a special case, such as for the UCI piggyback on PUSCH, a UE is configured by the BS to postpone or drop the UCI or SRS symbols in case of collision and transmit the UCI in a subframe(s) with less SRS symbols or no SRS.

In some cases, a shortened PUSCH with uplink DMRS and SRS may be transmitted in a same subframe. In some cases, a UE may be configured to only allow sPUSCH/DMRS symbols in the half subframe without SRS ( ${N}_{SRS}^{′} = 7$). In such cases, SRS may be limited within the other half subframe.

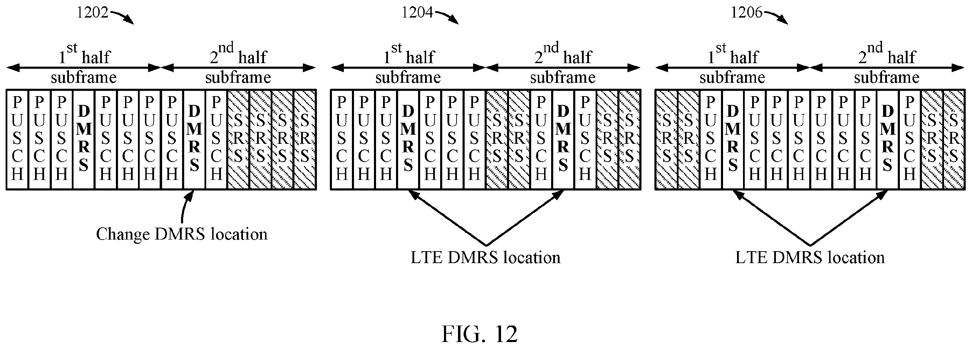

In some cases, a UE may allow sPUSCH/DMRS symbols in the same half subframe with SRS ( ${N}_{SRS}^{′} \leq 6$). For example, as illustrated in FIG. 12, one alternative 1202 may be to adjust the UL DMRS symbol position explicitly/implicitly configured based on SRS symbol locations. A second alternative 1204 may be to keep legacy LTE DMRS position (such as in the middle symbol per half subframe), but to allocate the SRS symbol(s) non-overlapped with LTE DMRS. This approach (e.g., second alternative 1204) may have little or no impact on orthogonal cover codes (OCCs) of DMRS for legacy UEs (e.g., the UE with legacy SRS configuration) or the OCCs of DMRS for legacy UE multiplexed with new UEs (e.g., the UE with new SRS configuration with more than one SRS symbol in normal subframe). However, this may create a need for an additional gap between the PUSCH/DRMS and SRS symbols (e.g., which would otherwise suffer from performance loss) if there is subband/antenna/power change for the PUSCH/DMRS and SRS symbols. Still another alternative 1206 may be to configure the UE to multiplex the DMRS comb and SRS comb in a same symbol. In this case (e.g., 1206), a comb offset may be signaled to the UE, for example, as part of the SRS configuration.

In legacy LTE, SRS and shortened PUCCH may only be allowed in the same subframe if higher-layer *ackNackSRS-SimultaneousTransmission* is TRUE for different PUCCH formats (except format 2/2a/2b). The PUCCH carries the UCI, such as a scheduling request (SI), HARQ-ACK, CSI reports (e.g., RI, CQI/PMI). For PUCCH format 1/1a/1b, there may be 3 DMRS symbols and 4 PUCCH symbols per half subframe. In case of the half subframe containing SRS in the last symbol, there are 3 DMRS symbols and 3 sPUCCH symbols. For PUCCH format 3/4/5, there may be 2 DMRS symbols and 5 PUCCH symbols per half subframe. In case of the half subframe containing SRS in the last symbol, there are 3 DMRS symbols and 4 sPUCCH symbols.

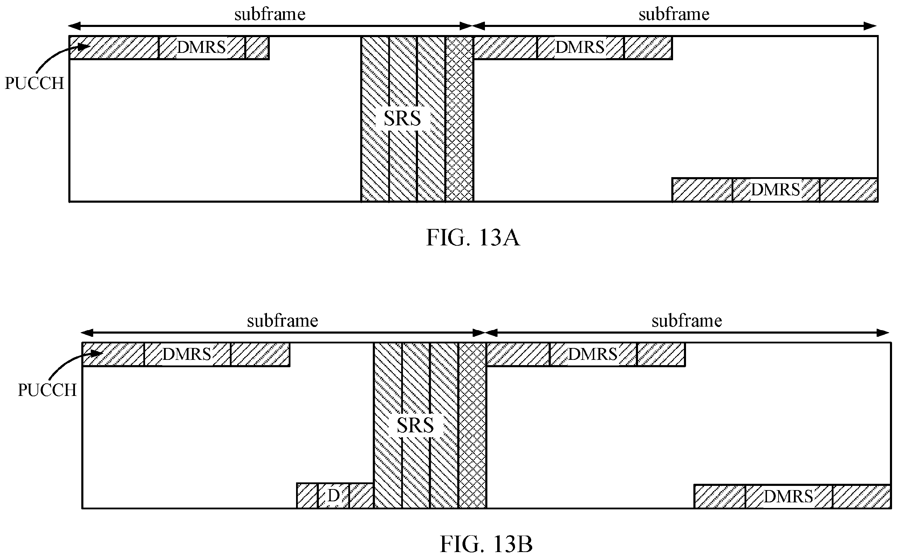

Aspects of the present disclosure, however, may allow SRS and shortened PUCCH in the same subframe/same component carrier (CC). In some cases, a UE may signal its capability to send short PUCCH together with more than one SRS symbol in a normal subframe (that such capability can be separate from the capability to transmit SRS in these symbols). In one alternative, shown in FIG. 13A, PUCCH may be allowed in the first half subframe and SRS in the second half subframe. In another alternative, shown in FIG. 13B, a UE may drop sPUCCH/DMRS on SRS/GP symbols but keep at least 1 DMRS symbol and remaining ( $7 - {N}_{DMRS}^{′} - {N}_{SRS}^{′}$) symbols for sPUCC. For example, ${N}_{DMRS}^{′}$ is the number of DMRS symbols in the half subframe that sPUCCH is configured based on the number of SRS/GP symbols, e.g., ${N}_{DMRS}^{′} = 1$ if ${N}_{SRS}^{′} = 4$ or 5 and ${N}_{DMRS}^{′} = 2$ *if* ${N}_{SRS}^{′} = 1$, 2 or 3. As shown, there may be 1 DMRS symbol and 2 PUCCH symbols in the second half subframe if ${N}_{SRS}^{′} = 4$. In some cases, the DRMS symbol may be put between two PUCCH symbols for better channel estimation.

In some cases, shortened PUCCH contents may include SI, HARK-ACK bits, and/or CSI reports, which may jointly be coded and rate matched around ${N}_{SRS}^{′}$ symbols. According to aspects, the CSI reports with lower priority than SI and HARK-ACK may be fully or partially dropped depending on ${N}_{SRS}^{′}$. For example, for sPUCCH with only one DMRS symbol in second half subframe, it may not be possible to overlap the HARQ-ACK on the DRMS (e.g., for format 2a/2b). However, PUCCH in the first slot may still be able to use the overlap of the HARQ-ACK on second DMRS.

In some cases, shortened PUCCH may use different power control on the remaining symbols due to ${N}_{SRS}^{′}$ symbols. For example, the power boosting offset may be configured as the relative ratio of the symbol number per subframe or half subframe (slot) for PUCCH rate matching around N_{SRS} against the remaining symbol number for PUCCH rate matching around ${N}_{SRS}^{′}$. According to one alternative, a subframe-based power control with the power boost offset due to ${N}_{SRS}^{′}$ may be configured by the BS for sPUCCH, such that: ${P}_{PUCCH} \left(i\right) = min \left\{\begin{matrix}{P}_{CMAX , c} , 10 {log}_{10} \left({M}_{PUCCH , c}\left(i\right)\right) + {P}_{O ) PUCCH} + {PL}_{c} + \\ {Δ}_{TF , c} + {Δ}_{F _ PUCCH} \left(F\right) + g \left(i\right) + 10 {log}_{10} \frac{\left(14-{N}_{{DMRS}_{sf}}-{N}_{SRS}\right)}{\left(14-{N}_{DMRS _ sf}^{′}-{N}_{SRS}^{′}\right.}\end{matrix}\right\}$ for the subframe of sPUCCH with ${N}_{SRS}^{′}$ SRS/GP symbols and ${N}_{DMRS _ sf}^{′}$ DMRS symbol(s).

According to another alternative, a slot-based power control with power boost offset due to ${N}_{SRS}^{′}$ is configured for sPUCCH such that: ${P}_{PUCCH} \left(i\right) = min \left\{\begin{matrix}{P}_{CMAX , c} , 10 {log}_{10} \left({M}_{PUCCH , c}\left(i\right)\right) + {P}_{O ) PUCCH} + {PL}_{c} + \\ {Δ}_{TF , c} + {Δ}_{F _ PUCCH} \left(F\right) + g \left(i\right) + 10 {log}_{10} \frac{\left(7-{N}_{DMRS}-{N}_{SRS}\right)}{\left(7-{N}_{DMRS}^{′}-{N}_{SRS}^{′}\right)}\end{matrix}\right\}$ for the slot of sPUCCH with ${N}_{SRS}^{′}$ SRS/GP symbols and ${N}_{DMRS}^{′}$ DMRS symbol(s).

In some cases, if a UE is configured by the BS with more than one serving cell, and for a group of cells belonging to bands that are signaled to be switched together (e.g., in a higher-layer *txAntennaSwitchUL* command), the UE may not be expected to transmit any SRS symbol on different antenna ports simultaneously.

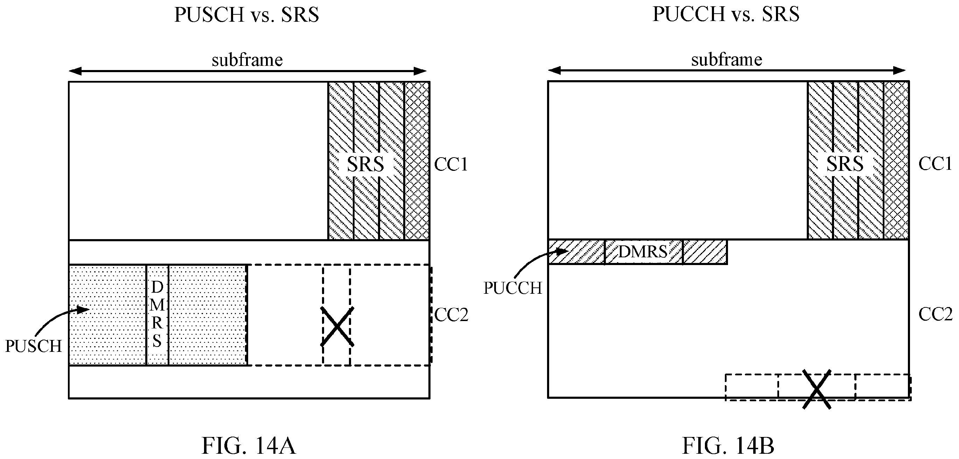

Aspects of the present disclosure, however, may allow for slot-based antenna switching/selection. For example, FIGs. 14 A and FIG. 14A show a first alternative where PUSCH and PUCCH, respectively, may be transmitted in a first half subframe and SRS antenna switching in the second half subframe. The slot-level shortened PUSCH/PUCCH and SRS can be scheduled for a UE to be transmitted in the same subframe but different slots in different CCs with no overlapping. According to a second alternative, symbol-based antenna switching/selection may be implemented. The symbol-based method may be based on the symbol-specific or symbol-group-specific configuration of the SRS antenna switching and the PUSCH/PUCCH antenna selection. In this case, there may be a need for an additional gap if too large power change due to the antenna switching on adjacent symbols for inter-band CA. A symbol period may be configured as the gap between symbols with antenna switching, e.g., two SRS symbols or SRS and PUSCH symbols. During the gap, the eNB is not expected to process the correct detection. In some cases, a UE may signal its capability to send PUSCH/PUCCH with antenna selection together with more than one SRS symbol with SRS antenna switching in a subframe (that such capability can be separate from the capability to transmit SRS in these symbols).

In legacy LTE, when SRS collides with PRACH in a normal subframe of the same serving cell, a UE may be configured to not transmit SRS. In UpPTS, short PRACH format 4 (length of 2 SC-FDMA symbols with 15kHz subcarrier spacing and normal CP) and SRS are allowed to be TDMed. In legacy LTE, a UE may not transmit SRS whenever SRS and a PUSCH transmission corresponding to a random access resource (RAR) Grant or a retransmission of the same transport block as part of the contention-based RA procedure coincide in the same subframe.

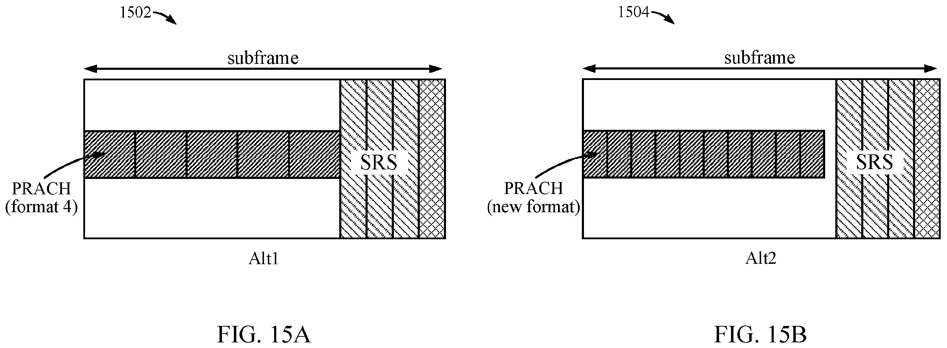

However, for SRS configurations with more than one symbol, aspects of the present disclosure may support SRS and repeated shortened PRACH (with or without cover codes on top of repeated PRACH symbols) in normal UL subframe may be supported. As illustrated in FIG. 15A, according to one alternative 1502, a configurable PRACH format 4 may be repeated in same subframe as SRS. As illustrated in FIG. 15B, according to another alternative 1504, a configurable new PRACH format (e.g., using a symbol with 15kHz subcarrier spacing but no cyclic prefix) may be transmitted in a same subframe as SRS. In some cases, a UE may signal its capability to send short PRACH together with more than one SRS symbol in a normal subframe (that such capability can be separate from the capability to transmit SRS in these symbols).

According to aspects, if there are more than one additional SRS transmitted in a subframe, a power change on at least the configured additional SRS symbols per UE may be minimized in the same subframe per CC. For example, in some cases, the power change may be achieved by using different antennas in two consecutive symbols, and/or different power (e.g., given by power control formula) in two consecutive symbols. Therefore, in some cases, the UE may be configured with common parameters for additional SRS symbols related to open-loop/closed-loop power control, and bandwidth/subband size with/without frequency hopping per CC. In addition, the UE may be configured with same SRS/gap location for antenna witching and/or frequency hopping on different CCs. In some cases, the maximum different power levels in a subframe (e.g., given by power control and antenna switching of SRS and/or PUSCH/PUCCH) may be limited to less than X, predefined or configured value based on UE capability.

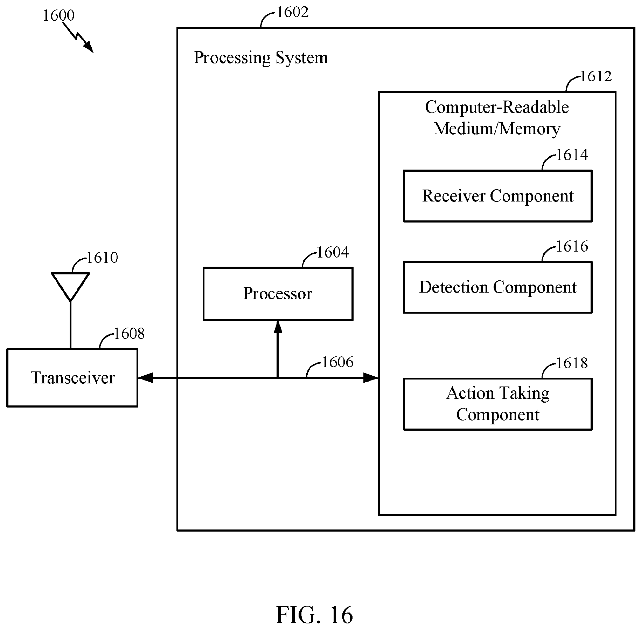

FIG. 16 illustrates a communications device 1600 (e.g., a UE) that may include various components (e.g., corresponding to means-plus-function components) configured to perform operations for the techniques disclosed herein, such as the operations illustrated in FIG. 7. The communications device 1600 includes a processing system 1602 coupled to a transceiver 1608. The transceiver 1608 is configured to transmit and receive signals for the communications device 1600 via an antenna 1610, such as the various signal described herein. The processing system 1602 may be configured to perform processing functions for the communications device 1600, including processing signals received and/or to be transmitted by the communications device 1600.

The processing system 1602 includes a processor 1604 coupled to a computer-readable medium/memory 1612 via a bus 1606. In certain aspects, the computer-readable medium/memory 1612 is configured to store instructions that when executed by processor 1604, cause the processor 1604 to perform the operations illustrated in FIG. 7, or other operations for performing the various techniques discussed herein.

In certain aspects, the processor system 1602 further includes a receiver component 1614 for performing the operations illustrated in FIG. 7 at 702. Additionally, the processing system 1602 includes a detection component 1616 for performing the operations illustrated in FIG. 7at 704 and an action taking component 1618 for performing the operations illustrated in FIG. 7 at 706. The receiver component 1614, detection component 1616, and action taking component 1618 may be coupled to the processor 1604 via bus 1606. In certain aspects, the receiver component 1614, detection component 1616, and action taking component 1618 may be hardware circuits. In certain aspects, the receiver component 1614, detection component 1616, and action taking component 1618 may be software components that are executed and run on processor 1604. The processing system 1602 may also include other components (e.g., hardware and/or software) not shown in FIG. 16 that configured to perform techniques presented herein. For example, in some cases, the processing system 1602 may include a determining component configured to perform techniques presented herein.

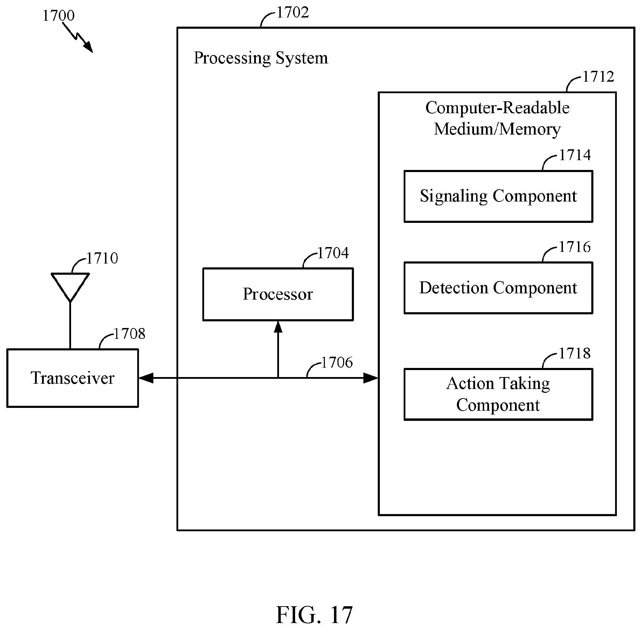

FIG. 17 illustrates a communications device 1700 (e.g., a base station/eNB) that may include various components (e.g., corresponding to means-plus-function components) configured to perform operations for the techniques disclosed herein, such as the operations illustrated in FIG. 8. The communications device 1700 includes a processing system 1702 coupled to a transceiver 1708. The transceiver 1708 is configured to transmit and receive signals for the communications device 1700 via an antenna 1710, such as the various signal described herein. The processing system 1702 may be configured to perform processing functions for the communications device 1700, including processing signals received and/or to be transmitted by the communications device 1700.

The processing system 1702 includes a processor 1704 coupled to a computer-readable medium/memory 1712 via a bus 1706. In certain aspects, the computer-readable medium/memory 1712 is configured to store instructions that when executed by processor 1704, cause the processor 1704 to perform the operations illustrated in FIG. 8, or other operations for performing the various techniques discussed herein.

In certain aspects, the processor system 1702 further includes a signaling component 1714 for performing the operations illustrated in FIG. 8 at 802, a detection component 1716 for performing the operations illustrated inFIG. 8 at 804, and an action taking component 1718 for performing the operations illustrated in FIG. 8 at 806. The signaling component 1714, detection component 1716, and action taking component 1718 may be coupled to the processor 1704 via bus 1706. In certain aspects, the signaling component 1714, detection component 1716, and action taking component 1718 may be hardware circuits. In certain aspects, signaling component 1714, detection component 1716, and action taking component 1718 may be software components that are executed and run on processor 1704.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user equipment 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For example, instructions for performing the operations described herein and illustrated in FIG. 8 and FIG. 9.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method of wireless communications by a user equipment, UE, in a network, comprising:
receiving (702), from the network, signaling indicating a sounding reference signal, SRS, configuration allocating a plurality of symbols for SRS transmissions within an uplink, UL, subframe, wherein the SRS configuration indicates a set of subframes, symbols, and a component carrier, CC, for at least one of SRS or a guard period, GP; **characterized by**:
detecting (704), at a symbol level, a collision between at least one of the allocated SRS symbols and another type of UL transmission to be transmitted by the UE; and
taking (706) one or more actions regarding the SRS transmissions, based on the detection of the collision, wherein the one or more actions comprises:
postponing transmission of a physical uplink shared channel, PUSCH, transmission with uplink control information until a subframe with one or more SRS symbols that are fewer in number than the plurality of symbols; or
bundling a physical uplink shared channel, PUSCH, transmission across at least two subframes with more than one SRS symbol.

2. The method of claim 1, wherein at least some of the SRS configuration is signaled via dedicated radio resource control signaling.

3. The method of claim 1, wherein:
the SRS configuration comprises an SRS configuration for a first group of one or more symbols that includes a last symbol in a subframe and the SRS configuration for the first group is signaled via cell-specific signaling; and
the SRS configuration also comprises an SRS configuration for a second group of one or more symbols other than the last symbol and the SRS configuration for the second group is signaled via radio resource control signaling.

4. A method of wireless communications by a network entity, comprising:
signaling (802), to at least one user equipment, UE, an indication of a sounding reference signal, SRS, configuration allocating a plurality of symbols for SRS transmissions within an uplink, UL, subframe, wherein the SRS configuration indicates a set of subframes, symbols, and a component carrier, CC, for at least one of SRS or a guard period, GP; **characterized by**:
detecting (804), at a symbol level, a collision between at least one of the allocated SRS symbols and another type of UL transmission to be transmitted by the UE; and
taking (806) one or more actions to process the SRS transmissions, based on the detection of the collision, wherein the one or more actions comprises:
receiving a postponed transmission of a physical uplink shared channel, PUSCH, transmission with uplink control information in a subframe with one or more SRS symbols that are fewer in number than the plurality of symbols; or
bundling a physical uplink shared channel, PUSCH, transmission across at least two subframes with more than one SRS symbol.

5. The method of claim 4, wherein at least some of the SRS configuration is signaled via dedicated radio resource control signaling.

6. The method of claim 4, wherein:
the SRS configuration comprises an SRS configuration for a first group of one or more symbols that includes a last symbol in a subframe and the SRS configuration for the first group is signaled via cell-specific signaling; and
the SRS configuration also comprises an SRS configuration for a second group of one or more symbols other than the last symbol and the SRS configuration for the second group is signaled via radio resource control signaling.

7. An apparatus for wireless communications by a user equipment, UE, comprising:
at least one processor;
memory coupled with the at least one processor, the memory storing instructions executable by the at least one processor to cause the apparatus to:
receive (702), from a network, signaling indicating a sounding reference signal, SRS, configuration allocating a plurality of symbols for SRS transmissions within an uplink, UL, subframe, wherein the SRS configuration indicates a set of subframes, symbols, and a component carrier, CC, for at least one of SRS or a guard period, GP; characterized further to:
detect (704), at a symbol level, a collision between at least one of the allocated SRS symbols and another type of UL transmission to be transmitted by the UE; and
take (706) one or more actions regarding the SRS transmissions, based on the detection of the collision, wherein the one or more actions comprises:
postponing transmission of a physical uplink shared channel, PUSCH, transmission with uplink control information until a subframe with one or more SRS symbols that are fewer in number than the plurality of symbols; or
bundling a physical uplink shared channel, PUSCH, transmission across at least two subframes with more than one SRS symbol.

8. The apparatus of claim 7, wherein at least some of the SRS configuration is signaled via dedicated radio resource control signaling.

9. The apparatus of claim 7, wherein:
the SRS configuration comprises an SRS configuration for a first group of one or more symbols that includes a last symbol in a subframe and the SRS configuration for the first group is signaled via cell-specific signaling; and
the SRS configuration also comprises an SRS configuration for a second group of one or more symbols other than the last symbol and the SRS configuration for the second group is signaled via radio resource control signaling.

10. An apparatus for wireless communications by a network, comprising:
at least one processor;
memory coupled with the at least one processor, the memory storing instructions executable by the at least one processor to cause the apparatus to:
signal (802), to at least one user equipment, UE, an indication of a sounding reference signal, SRS, configuration allocating a plurality of symbols for SRS transmissions within an uplink, UL, subframe, wherein the SRS configuration indicates a set of subframes, symbols, and a component carrier, CC, for at least one of SRS or a guard period, GP; characterized further to:
detect (804), at a symbol level, a collision between at least one of the allocated SRS symbols and another type of UL transmission to be transmitted by the UE; and
take (806) one or more actions to process the SRS transmissions, based on the detection of the collision, wherein the one or more actions comprises:
receiving a postponed transmission of a physical uplink shared channel, PUSCH, transmission with uplink control information in a subframe with one or more SRS symbols that are fewer in number than the plurality of symbols; or
bundling a physical uplink shared channel, PUSCH, transmission across at least two subframes with more than one SRS symbol.

11. The apparatus of claim 10, wherein at least some of the SRS configuration is signaled via dedicated radio resource control signaling.

12. The apparatus of claim 10, wherein:
the SRS configuration comprises an SRS configuration for a first group of one or more symbols that includes a last symbol in a subframe and the SRS configuration for the first group is signaled via cell-specific signaling; and
the SRS configuration also comprises an SRS configuration for a second group of one or more symbols other than the last symbol and the SRS configuration for the second group is signaled via radio resource control signaling.

## Patentansprüche

1. Ein Verfahren für drahtlose Kommunikationen durch ein Benutzergerät (User Equipment bzw. UE) in einem Netz, aufweisend:
Empfangen (702), von dem Netz, einer Signalisierung, die eine Sondierungsreferenzsignal (SRS)-Konfiguration angibt, die eine Vielzahl von Symbolen für SRS-Sendungen in einem Uplink (UL)-Subrahmen zuweist, wobei die SRS-Konfiguration einen Satz von Subrahmen, Symbole und einen Komponententräger (Component Carrier bzw. CC) für ein SRS und/oder eine Schutzperiode (Guard Period bzw. GP) angibt, **gekennzeichnet durch**:
Erfassen (704), auf einer Symbolebene, einer Kollision zwischen wenigstens einem der zugewiesenen SRS-Symbole und einem anderen Typ einer durch das UE zu sendenden UL-Sendung, und
Ergreifen (706) einer oder mehrerer Aktionen in Bezug auf die SRS-Sendungen basierend auf der Erfassung der Kollision, wobei die eine oder die mehreren Aktionen aufweisen:
Verschieben des Sendens einer Gemeinsamer-physikalischer-Uplink-Kanal (PUSCH)-Sendung mit Uplink-Steuerinformationen bis zu einem Subrahmen mit einem oder mehreren SRS-Symbolen, deren Anzahl kleiner als diejenige der Vielzahl von Symbolen ist, oder
Bündeln einer Gemeinsamer-physikalischer-Uplink-Kanal (PUSCH)-Sendung über wenigstens zwei Subrahmen mit mehr als einem SRS-Symbol.

2. Verfahren nach Anspruch 1, wobei wenigstens ein Teil der SRS-Konfiguration über eine dedizierte Funkressourcensteuerung-Signalisierung signalisiert wird.

3. Verfahren nach Anspruch 1, wobei:
die SRS-Konfiguration eine SRS-Konfiguration für eine erste Gruppe eines oder mehrerer Symbole einschließlich eines letzten Symbols in einem Subrahmen aufweist und die SRS-Konfiguration für die erste Gruppe über eine zellenspezifische Signalisierung signalisiert wird, und
die SRS-Konfiguration weiterhin eine SRS-Konfiguration für eine zweite Gruppe eines oder mehrerer anderer Symbole als des letzten Symbols aufweist und die SRS-Konfiguration für die zweite Gruppe über eine Funkressourcensteuerung-Signalisierung signalisiert wird.

4. Ein Verfahren für drahtlose Kommunikationen durch eine Netzeinheit, aufweisend:
Signalisieren (802), an wenigstens ein Benutzergerät (User Equipment bzw. UE), einer Angabe einer Sondierungsreferenzsignal (SRS)-Konfiguration, die eine Vielzahl von Symbolen für SRS-Sendungen in einem Uplink (UL)-Subrahmen zuweist, wobei die SRS-Konfiguration einen Satz von Subrahmen, Symbole und einen Komponententräger (Component Carrier bzw. CC) für ein SRS und/oder eine Schutzperiode (Guard Period bzw. GP) angibt, **gekennzeichnet durch**:
Erfassen (804), auf einer Symbolebene, einer Kollision zwischen wenigstens einem der zugewiesenen SRS-Symbole und einem anderen Typ einer durch das UE zu sendenden UL-Sendung, und
Ergreifen (806) einer oder mehrerer Aktionen für das Verarbeiten der SRS-Sendungen basierend auf der Erfassung der Kollision, wobei die eine oder die mehreren Aktionen aufweisen:
Empfangen einer verschobenen Gemeinsamer-physikalischer-Uplink-Kanal (PUSCH)-Sendung mit Uplink-Steuerinformationen in einem Subrahmen mit einem oder mehreren SRS-Symbolen, deren Anzahl kleiner als diejenige der Vielzahl von Symbolen ist, oder
Bündeln einer Gemeinsamer-physikalischer-Uplink-Kanal (PUSCH)-Sendung über wenigstens zwei Subrahmen mit mehr als einem SRS-Symbol.

5. Verfahren nach Anspruch 4, wobei wenigstens ein Teil der SRS-Konfiguration über eine dedizierte Funkressourcensteuerung-Signalisierung signalisiert wird.

6. Verfahren nach Anspruch 4, wobei:
die SRS-Konfiguration eine SRS-Konfiguration für eine erste Gruppe eines oder mehrerer Symbole einschließlich eines letzten Symbols in einem Subrahmen aufweist und die SRS-Konfiguration für die erste Gruppe über eine zellenspezifische Signalisierung signalisiert wird, und
die SRS-Konfiguration weiterhin eine SRS-Konfiguration für eine zweite Gruppe eines oder mehrerer anderer Symbole als des letzten Symbols aufweist und die SRS-Konfiguration für die zweite Gruppe über eine Funkressourcensteuerung-Signalisierung signalisiert wird.

7. Eine Vorrichtung für drahtlose Kommunikationen durch ein Benutzergerät (User Equipment bzw. UE), aufweisend:
wenigstens einen Prozessor,
einen Speicher, der mit dem wenigstens einen Prozessor gekoppelt ist, wobei der Speicher Befehle speichert, die durch den wenigstens einen Prozessor ausgeführt werden können, um die Vorrichtung zu veranlassen zum:
Empfangen (702), von einem Netz, einer Signalisierung, die eine Sondierungsreferenzsignal (SRS)-Konfiguration angibt, die eine Vielzahl von Symbolen für SRS-Sendungen in einem Uplink (UL)-Subrahmen zuweist, wobei die SRS-Konfiguration einen Satz von Subrahmen, Symbole und einen Komponententräger (Component Carrier bzw. CC) für ein SRS und/oder eine Schutzperiode (Guard Period bzw. GP) angibt, **gekennzeichnet durch**:
Erfassen (704), auf einer Symbolebene, einer Kollision zwischen wenigstens einem der zugewiesenen SRS-Symbole und einem anderen Typ einer durch das UE zu sendenden UL-Sendung, und
Ergreifen (706) einer oder mehrerer Aktionen in Bezug auf die SRS-Sendungen basierend auf der Erfassung der Kollision, wobei die eine oder die mehreren Aktionen aufweisen:
Verschieben des Sendens einer Gemeinsamer-physikalischer-Uplink-Kanal (PUSCH)-Sendung mit Uplink-Steuerinformationen bis zu einem Subrahmen mit einem oder mehreren SRS-Symbolen, deren Anzahl kleiner als diejenige der Vielzahl von Symbolen ist, oder
Bündeln einer Gemeinsamer-physikalischer-Uplink-Kanal (PUSCH)-Sendung über wenigstens zwei Subrahmen mit mehr als einem SRS-Symbol.

8. Vorrichtung nach Anspruch 7, wobei wenigstens ein Teil der SRS-Konfiguration über eine dedizierte Funkressourcensteuerung-Signalisierung signalisiert wird.

9. Vorrichtung nach Anspruch 7, wobei:
die SRS-Konfiguration eine SRS-Konfiguration für eine erste Gruppe eines oder mehrerer Symbole einschließlich eines letzten Symbols in einem Subrahmen aufweist und die SRS-Konfiguration für die erste Gruppe über eine zellenspezifische Signalisierung signalisiert wird, und
die SRS-Konfiguration weiterhin eine SRS-Konfiguration für eine zweite Gruppe eines oder mehrerer anderer Symbole als des letzten Symbols aufweist und die SRS-Konfiguration für die zweite Gruppe über eine Funkressourcensteuerung-Signalisierung signalisiert wird.

10. Eine Vorrichtung für drahtlose Kommunikationen durch ein Netz, aufweisend:
wenigstens einen Prozessor,
einen Speicher, der mit dem wenigstens einen Prozessor gekoppelt ist, wobei der Speicher Befehle speichert, die durch den wenigstens einen Prozessor ausgeführt werden können, um die Vorrichtung zu veranlassen zum:
Signalisieren (802), an wenigstens ein Benutzergerät (User Equipment bzw. UE), einer Angabe einer Sondierungsreferenzsignal (SRS)-Konfiguration, die eine Vielzahl von Symbolen für SRS-Sendungen in einem Uplink (UL)-Subrahmen zuweist, wobei die SRS-Konfiguration einen Satz von Subrahmen, Symbole und einen Komponententräger (Component Carrier bzw. CC) für ein SRS und/oder eine Schutzperiode (Guard Period bzw. GP) angibt, **gekennzeichnet durch**:
Erfassen (804), auf einer Symbolebene, einer Kollision zwischen wenigstens einem der zugewiesenen SRS-Symbole und einem anderen Typ einer durch das UE zu sendenden UL-Sendung, und
Ergreifen (806) einer oder mehrerer Aktionen für das Verarbeiten der SRS-Sendungen basierend auf der Erfassung der Kollision, wobei die eine oder die mehreren Aktionen aufweisen:
Empfangen einer verschobenen Gemeinsamer-physikalischer-Uplink-Kanal (PUSCH)-Sendung mit Uplink-Steuerinformationen in einem Subrahmen mit einem oder mehreren SRS-Symbolen, deren Anzahl kleiner als diejenige der Vielzahl von Symbolen ist, oder
Bündeln einer Gemeinsamer-physikalischer-Uplink-Kanal (PUSCH)-Sendung über wenigstens zwei Subrahmen mit mehr als einem SRS-Symbol.

11. Vorrichtung nach Anspruch 10, wobei wenigstens ein Teil der SRS-Konfiguration über eine dedizierte Funkressourcensteuerung-Signalisierung signalisiert wird.

12. Vorrichtung nach Anspruch 10, wobei:
die SRS-Konfiguration eine SRS-Konfiguration für eine erste Gruppe eines oder mehrerer Symbole einschließlich eines letzten Symbols in einem Subrahmen aufweist und die SRS-Konfiguration für die erste Gruppe über eine zellenspezifische Signalisierung signalisiert wird, und
die SRS-Konfiguration weiterhin eine SRS-Konfiguration für eine zweite Gruppe eines oder mehrerer anderer Symbole als des letzten Symbols aufweist und die SRS-Konfiguration für die zweite Gruppe über eine Funkressourcensteuerung-Signalisierung signalisiert wird.

## Revendications

1. Procédé de communications sans fil par un équipement utilisateur, UE, dans un réseau, comprenant :
une réception (702), à partir du réseau, d'une signalisation indiquant une configuration de signal de référence de sondage, SRS, attribuant une pluralité de symboles pour des transmissions SRS dans une sous-trame de liaison montante, UL, dans lequel la configuration SRS indique un ensemble de sous-trames, de symboles, et une porteuse composante, CC, pour au moins l'un des éléments parmi un SRS ou une période de garde, GP ; **caractérisé par** :
une détection (704), à un niveau de symbole, d'une collision entre au moins l'un des symboles SRS attribués et un autre type de transmission UL devant être transmise par l'UE ; et
une réalisation (706) d'une ou de plusieurs actions concernant les transmissions SRS, sur la base de la détection de la collision, dans lequel les une ou plusieurs actions comprennent :
un report de transmission d'une transmission de canal partagé physique de liaison montante, PUSCH, avec des informations de commande de liaison montante jusqu'à une sous-trame avec un ou plusieurs symboles SRS qui sont moins nombreux que la pluralité de symboles ; ou
un groupement d'une transmission de canal partagé physique de liaison montante, PUSCH, sur au moins deux sous-trames avec plus d'un symbole SRS.

2. Procédé selon la revendication 1, dans lequel au moins une partie de la configuration SRS est signalée par le biais d'une signalisation de commande de ressource radio dédiée.

3. Procédé selon la revendication 1, dans lequel :
la configuration SRS comprend une configuration SRS pour un premier groupe d'un ou de plusieurs symboles qui comprend un dernier symbole dans une sous-trame et la configuration SRS pour le premier groupe est signalée par le biais d'une signalisation spécifique à une cellule ; et
la configuration SRS comprend également une configuration SRS pour un second groupe d'un ou de plusieurs symboles autres que le dernier symbole et la configuration SRS pour le second groupe est signalée par le biais d'une signalisation de commande de ressource radio.

4. Procédé de communications sans fil par une entité de réseau, comprenant :
une signalisation (802), à au moins un équipement utilisateur, UE, d'une indication d'une configuration de signal de référence de sondage, SRS, attribuant une pluralité de symboles pour des transmissions SRS dans une sous-trame de liaison montante, UL, dans lequel la configuration SRS indique un ensemble de sous-trames, de symboles, et une porteuse composante, CC, pour au moins l'un des éléments parmi un SRS ou une période de garde, GP ; **caractérisé par** :
une détection (804), à un niveau de symbole, d'une collision entre au moins l'un des symboles SRS attribués et un autre type de transmission UL devant être transmise par l'UE ; et
une réalisation (806) d'une ou de plusieurs actions pour traiter les transmissions SRS, sur la base de la détection de la collision, dans lequel les une ou plusieurs actions comprennent :
une réception d'une transmission reportée d'une transmission de canal partagé physique de liaison montante, PUSCH, avec des informations de commande de liaison montante dans une sous-trame avec un ou plusieurs symboles SRS qui sont moins nombreux que la pluralité de symboles ; ou
un groupement d'une transmission de canal partagé physique de liaison montante, PUSCH, sur au moins deux sous-trames avec plus d'un symbole SRS.

5. Procédé selon la revendication 4, dans lequel au moins une partie de la configuration SRS est signalée par le biais d'une signalisation de commande de ressource radio dédiée.

6. Procédé selon la revendication 4, dans lequel :
la configuration SRS comprend une configuration SRS pour un premier groupe d'un ou de plusieurs symboles qui comprend un dernier symbole dans une sous-trame et la configuration SRS pour le premier groupe est signalée par le biais d'une signalisation spécifique à une cellule ; et
la configuration SRS comprend également une configuration SRS pour un second groupe d'un ou de plusieurs symboles autres que le dernier symbole et la configuration SRS pour le second groupe est signalée par le biais d'une signalisation de commande de ressource radio.

7. Appareil pour des communications sans fil par un équipement utilisateur, UE, comprenant :
au moins un processeur ;
une mémoire couplée à l'au moins un processeur, la mémoire stockant des instructions exécutables par l'au moins un processeur pour amener l'appareil à :
recevoir (702), à partir d'un réseau, une signalisation indiquant une configuration de signal de référence de sondage, SRS, attribuant une pluralité de symboles pour des transmissions SRS dans une sous-trame de liaison montante, UL, dans lequel la configuration SRS indique un ensemble de sous-trames, de symboles, et une porteuse composante, CC, pour au moins l'un des éléments parmi un SRS ou une période de garde, GP ; caractérisé en outre pour :
détecter (704), à un niveau de symbole, une collision entre au moins l'un des symboles SRS attribués et un autre type de transmission UL devant être transmise par l'UE ; et
réaliser (706) une ou plusieurs actions concernant les transmissions SRS, sur la base de la détection de la collision, dans lequel les une ou plusieurs actions comprennent :
un report de transmission d'une transmission de canal partagé physique de liaison montante, PUSCH, avec des informations de commande de liaison montante jusqu'à une sous-trame avec un ou plusieurs symboles SRS qui sont moins nombreux que la pluralité de symboles ; ou
un groupement d'une transmission de canal partagé physique de liaison montante, PUSCH, sur au moins deux sous-trames avec plus d'un symbole SRS.

8. Appareil selon la revendication 7, dans lequel au moins une partie de la configuration SRS est signalée par le biais d'une signalisation de commande de ressource radio dédiée.

9. Appareil selon la revendication 7, dans lequel :
la configuration SRS comprend une configuration SRS pour un premier groupe d'un ou de plusieurs symboles qui comprend un dernier symbole dans une sous-trame et la configuration SRS pour le premier groupe est signalée par le biais d'une signalisation spécifique à une cellule ; et
la configuration SRS comprend également une configuration SRS pour un second groupe d'un ou de plusieurs symboles autres que le dernier symbole et la configuration SRS pour le second groupe est signalée par le biais d'une signalisation de commande de ressource radio.

10. Appareil pour des communications sans fil par un réseau, comprenant :
au moins un processeur ;
une mémoire couplée à l'au moins un processeur, la mémoire stockant des instructions exécutables par l'au moins un processeur pour amener l'appareil à :
signaler (802), à au moins un équipement utilisateur, UE, une indication d'une configuration de signal de référence de sondage, SRS, attribuant une pluralité de symboles pour des transmissions SRS dans une sous-trame de liaison montante, UL, dans lequel la configuration SRS indique un ensemble de sous-trames, de symboles, et une porteuse composante, CC, pour au moins l'un des éléments parmi un SRS ou une période de garde, GP ; caractérisé en outre pour :
détecter (804), à un niveau de symbole, une collision entre au moins l'un des symboles SRS attribués et un autre type de transmission UL devant être transmise par l'UE ; et
réaliser (806) une ou plusieurs actions pour traiter les transmissions SRS, sur la base de la détection de la collision, dans lequel les une ou plusieurs actions comprennent :
une réception d'une transmission reportée d'une transmission de canal partagé physique de liaison montante, PUSCH, avec des informations de commande de liaison montante dans une sous-trame avec un ou plusieurs symboles SRS qui sont moins nombreux que la pluralité de symboles ; ou
un groupement d'une transmission de canal partagé physique de liaison montante, PUSCH, sur au moins deux sous-trames avec plus d'un symbole SRS.

11. Appareil selon la revendication 10, dans lequel au moins une partie de la configuration SRS est signalée par le biais d'une signalisation de commande de ressource radio dédiée.

12. Appareil selon la revendication 10, dans lequel :
la configuration SRS comprend une configuration SRS pour un premier groupe d'un ou de plusieurs symboles qui comprend un dernier symbole dans une sous-trame et la configuration SRS pour le premier groupe est signalée par le biais d'une signalisation spécifique à une cellule ; et
la configuration SRS comprend également une configuration SRS pour un second groupe d'un ou de plusieurs symboles autres que le dernier symbole et la configuration SRS pour le second groupe est signalée par le biais d'une signalisation de commande de ressource radio.
